Europäisches Patentamt

European Patent Office

Office européen des brevets

(19)

(11) **EP 0 656 104 B1**

(12) **FASCICULE DE BREVET EUROPEEN**

(45) Date de publication et mention
de la délivrance du brevet:
**09.07.1997 Bulletin 1997/28**

(21) Numéro de dépôt: **94913651.9**

(22) Date de dépôt: **15.04.1994**

(51) Int Cl.6: **F16H 1/46**, F16H 13/08

(86) Numéro de dépôt international:
**PCT/FR94/00424**

**WO 94/24460 (27.10.1994 Gazette 1994/24)**

(54) **DISPOSITIF MECANIQUE DE REDUCTION, DE MULTIPLICATION ET DE VARIATION DE VITESSE DE ROTATION**

MECHANISCHE VORRICHTUNG ZUR UNTERSETZUNG, ÜBERSETZUNG UND ÄNDERUNG DER DREHZAHL

MECHANICAL DEVICE FOR ROTATION SPEED REDUCTION, MULTIPLICATION AND VARIATION

(84) Etats contractants désignés:
**BE CH DE ES FR GB IT LI PT SE**

(30) Priorité: **16.04.1993 FR 9304785**

(43) Date de publication de la demande:
**07.06.1995 Bulletin 1995/23**

(73) Titulaires:
• **DESGARDIN, Marcel**
  **F-13350 Charleval (FR)**
• **DESGARDIN, Gilbert**
  **F-38600 Fontaine (FR)**

(72) Inventeurs:
• **DESGARDIN, Marcel**
  **F-13350 Charleval (FR)**

• **DESGARDIN, Gilbert**
  **F-38600 Fontaine (FR)**

(74) Mandataire: **Thivillier, Patrick**
  **Cabinet Laurent & Charras,**
  **3 Place de l'Hôtel de Ville,**
  **B.P. 203**
  **42005 Saint-Etienne Cédex (FR)**

(56) Documents cités:
CH-A- 257 825       DE-A- 2 249 479
GB-A- 271 668       GB-A- 2 175 668
US-A- 3 705 522     US-A- 5 062 823

## Description

La présente invention a pour objet un dispositif mécanique de réduction, de multiplication et de variation de vitesse de rotation.

Elle concerne le moyen de réaliser, à partir d'éléments tournants dentés ou lisses, des démultiplications de très grande valeur des vitesses de rotation, et peut trouver de nombreuses applications pour des équipements mécaniques très divers, tels que têtes de tunneliers, tambours d'enroulement de câble dans des systèmes de levage et de manutention, systèmes de roues pour locomotions lentes: grues portuaires, plateformes de transports de lanceurs spaciaux, engins de travaux publics, entraînement de centrifugeuses, broyeurs, etc.

Le dispositif, de par ses possibilités de très importantes réductions, est parfaitement adapté pour obtenir la rotation journalière des instruments de poursuite astrale, qui ont habituellement recours à des mécanismes pourvus de roues dentées gigantesques, ou à une multitude de réducteurs à plusieurs étages en cascade, pour obtenir la vitesse de rotation de un tour par jour !

Enfin, dans son principe de base, aucun des éléments en rotation n'étant soumis à des mouvements complexes entraînant l'apparition de forces liées à une précession gyroscopique. Le dispositif assimilable à un réducteur à trains imbriqués n'a de ce fait aucune circulation interne de forces parasites. Ses qualités essentielles: précision de fonctionnement, répétabilité d'un mouvement, excellent rendement, faible inertie au démarrage et à l'arrêt, encombrement réduit, haute rigidité, en font un produit économiquement avantageux, répondant à un maximum d'utilisations et plus particulièrement dans la robotique industrielle et la robotique spaciale embarquées ou non.

Une version "à arbre creux" peut convenir à l'entraînement d'un rotor d'hélicoptère, la sortie de turbine attaquant une couronne dentée d'entrée par un pignon conique, et les timoneries de commandes de pas passant par le canal central.

Les mécanismes à très grand rapport de réduction réalisés à ce jour, soit sont constitués d'une cascade de nombreux pignons ou roues, soit comportent des roues dentées de très fort diamètre, et nécessitent le plus souvent des techniques de taillage particulières, qui dans tous les cas conduit à un rendement médiocre, un encombrement important et à des coûts d'étude et de fabrication très élevés.

Les engrenages à trains épicycloïdaux, dont le remarquable rendement et le silence de fonctionnement sont connus, n'ont pu, jusqu'à maintenant, être utilisés pour les très fortes démultiplications, qu'en multipliant les étages de réduction, du fait d'un rapport de réduction unitaire limité.

Par ailleurs, les réducteurs actuellement disponibles sur le marché ne présentent pas de possibilités de réglage du jeu des engrènements sauf en dédoublant l'une des roues. Le qualificatif "sans jeu" n'est dû qu'à la précision de fabrication et à l'appareillement des pièces au montage après contrôle dimensionnel. Ceci entraîne des investissements de fabrication assez lourds et un coût de montage très élevé.

Par le brevet US-A-3705522, on connaît un réducteur à très grand rapport de réduction, comprenant une couronne fixe et une couronne de sortie, engrènant chacune respectivement avec un satellite. Les deux satellites ne sont pas coaxiaux et sont montés sur un porte-satellite commun qui est relié à un arbre d'entrée. Dans ce brevet, le boîtier porte-satellite constitue l'organe moteur. Le satellite d'entrée et le satellite de sortie sont entrainés en giration par le même axe, traversant le châssis et comportant deux excentriques. Le satellite d'entrée et le satellite de sortie sont solidarisés en rotation par leur engrènement, sur un organe satellite de renvoi commun. Dans ce document, la solution divulguée implique dans chaque train, l'encombrement de quatre satellites dont deux seulement assurent l'engrènement avec la couronne. Il en résulte une limitation des rapports de réduction.

Les modules et les nombres de dents des deux satellites doivent nécessairement être les mêmes.

Le dispositif selon la présente invention, qui utilise le principe des trains "épicycloïdaux", est à même de remédier à tous ces inconvénients.

En effet, en version "à roues dentées", il permet d'obtenir une réduction donnée avec une précision comprise entre 98 et 100% de la réduction désirée, grâce à un nombre de roues toujours inférieur à celui nécessaire à tous les autres moyens connus, avec un rendement toujours supérieur et dans un volume toujours inférieur à ces autres moyens, sans faire appel à d'autres techniques de taillage de dentures que celles couramment utilisées dans l'industrie de l'engrenage. En outre, de par son principe même, le dispositif permet, quel que soit le sens de rotation d'entrée ou de sortie, un montage sans jeu au départ, un réglage de jeu en cours d'exploitation, un parfait équilibrage des efforts sur tous les satellites, ce qui diminue considérablement l'usure des dentures et permet les pointes importantes d'effort qui surviennent au démarrage et à l'arrêt de tout système mécanique. En version à éléments tournants lisses, ou "à roues de contact", l'invention se caractérise par des capacités de réductions extrêmement élevées du fait que les éléments transmettant les rotations (roues lisses, poulies, galets, courroies ..) peuvent être considérés comme des éléments dentés possédant une infinité de dents de module unique; les couples transmis n'étant plus tributaires que des pressions de contact entre les éléments en rotation.

Dans tous les cas et configurations, l'invention se caractérise en outre par sa capacité à supporter un pilotage sur l'organe de réaction, permettant d'ajuster la vitesse de sortie, et de la rendre ainsi variable à volonté, et notamment d'inverser le sens de rotation de sortie, sans changer ni le sens ni la vitesse de rotation à l'entrée.

Les études préliminaires ont montré que les performances espérables du dispositif revendiqué recouvraient toutes les gammes d'appareils réducteurs existants au delà de leurs capacités propres de réduction unitaire, sans distinction de puissance, de précision ni de rendement, ces qualités en principe incompatibles étant toutes regroupées dans le principe de base.

En combinant variation de réduction et inversion du sens de rotation, l'invention trouve notamment des applications dans la transmission des véhicules, en regroupant dans le principe une boîte de vitesse à variation continue et un différentiel actif.

Pour résoudre ces différents problèmes et atteindre les objectifs fixés, il a été conçu et mis au point un dispositif conforme aux caractéristiques définies dans la revendication 1.

Sur les dessins annexés, donnés à titre d'exemples non limitatifs de formes de réalisation de l'objet de l'invention:

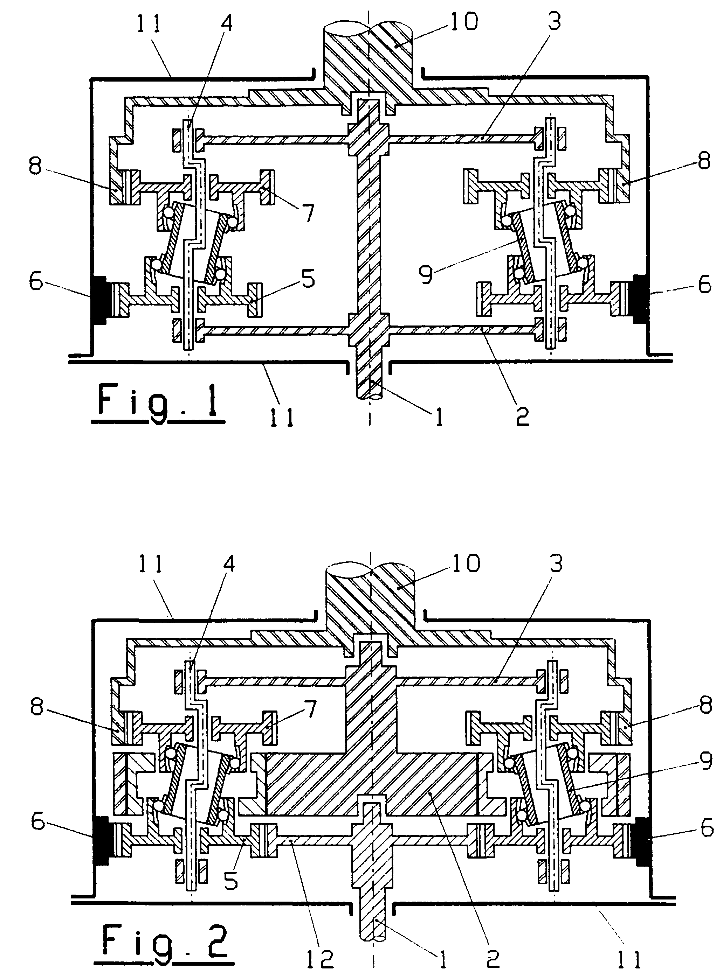

la figure 1 est une coupe schématique axiale du dispositif de base, dans lequel les couples de satellites sont entraînés directement par l'arbre d'entrée, et la figure 2 représente dans les mêmes conditions une variante dans laquelle les couples de satellites sont entraînés par l'intermédiaire d'un planétaire.

Le dispositif de la figures 1 est constitué d'un arbre d'entrée 1 entraînant un ou plusieurs couples de satellites formés chacun d'un satellite d'entrée 5 et d'un satellites de sortie 7 non coaxiaux. Le satellite d'entrée et le satellite de sortie sont rendus synchrones en giration par leur appartenance à un châssis formé de deux flasques porte-satellites 2 et 3, et synchrones en rotation par un accouplement 4 et un joint homocinétique 9. Le satellite d'entrée 5 engrène avec une couronne fixe 6 ou conditionnellement mobile. Le satellite de sortie 7 engrène avec une couronne mobile 8 solidaire de l'arbre de sortie 10. Le châssis 2, 3 est en rotation par rapport au corps 11 ou carter de l'appareil.

Sur la figure 2 l'arbre d'entrée 1 entraîne le ou les satellites d'entrée 5 par l'intermédiaire d'un planétaire d'entrée 12 pouvant être mâle ou femelle.

Le fonctionnement du système sans planétaire est le suivant (figure 1):

La rotation d'un tour de l'arbre d'entrée 1 entraîne la révolution d'une giration de l'accouplement 4 et donc d'un certain développement circonférentiel DSE du satellite d'entrée 5 parcourant la couronne fixe 6, DSE étant égal au nombre de dents CF de la couronne fixe 6 divisé par le nombre de dents SE du sattelite d'entrée.

Les deux satellites étant synchrones en rotation, grâce au joint homocinétique 9, le développement circonférentiel DSS du satellite de sortie 7 est fonction du rapport de leur nombre de dents respectifs SE et SS:

$$DSS = DSE \times SS, \text{ donc } DSS = (CF \times SS) : SE$$

La couronne mobile, dont le nombre de dents est CM, est entraînée à son tour avec une réduction différentielle RD égale, pour une giration du satellite d'entrée (ou un tour de l'arbre d'entrée 1), à:

$$RD = CM : (CM - DSS)$$

Par exemple avec:

- CF = 100 dents
- SE = 41 dents
- SS = 57 dents

on a: DSS = (CF x SS) : SE = (100 x 57) : 41 = 139, 0244

En prenant CM = 139 dents, on obtient une rotation de la couronne mobile (et de l'arbre de sortie 10) de:

$$139 : (139 - 139,0244) = - 5700,5657$$

De la même manière, avec:

- CF = 1947 dents
- SE = 962 dents
- SS = 1213 dents
- CM = 2109 dents

on obtient une réduction de 2 160 000 avec une précision de l'ordre de -1,78E-4.

Pour une bonne interprétation du fonctionnement avec planétaire d'entrée 12, nous prendrons pour exemple les valeurs chiffrées suivantes:

PP = 13 dents (planétaire d'entrée)
SE = 38 dents (satellite d'entrée)
CF = 89 dents (couronne fixe)
SS = 26 dents (satellite de sortie)
CM = 61 dents (couronne mobile)

Les modules de denture interviennent dans le calcul des arrangements de chaque occurence de réduction et en tenant compte des puissances à transmettre. C'est le cas dans l'exemple qui suit dans lequel le module du planétaire 12, du satellite d'entrée 5 et de la couronne fixe 6 vaut 1,75, le module du satellite de sortie 7 et de la couronne mobile 8 valant 2,5.

La réduction totale RT est le produit de la réduction planétaire RP par la réduction différentielle RD.

$$RP = 1 + (CF/PP) = 1 + (89/13) = 7,846$$

$$RD = CM / [CM - ((CF/SE) \times SS)]$$

$$RD = 61 / [61 - ((89/38) \times 26)] = 579{,}499$$

$$RT = RP \times RD = 7{,}846 \times 579{,}499 = 4546{,}757$$

Cette combinaison donne un décalage radial entre satellite de sortie 7 et d'entrée 5 égal à 0,875.

Explication de la réduction différentielle:

La giration du châssis 2, 3 entraîne un certain développement circonférentiel DSE égal au rapport CF/SE. Les satellites 5 et 7 étant synchrones en giration et rotation, le développement circonférentiel DSS du satellite de sortie est fonction du produit de DSE par SS:

$$DSS = (CF/SE) \times SS = (89/38) \times 26 = 60{,}894$$

La couronne mobile 8, de nombre de dents CM, est entraînée en rotation avec, pour une giration du satellite d'entrée 5, une réduction différentielle RD = CM / (CM - DSS)

Le nombre de dents de la couronne mobile peut prendre toute valeur compatible avec le débattement autorisé par le joint homocinétique 9 utilisé. Cependant, pour obtenir la plus grande valeur possible de réduction ou de multiplication de vitesse, CM doit être égal à l'entier le plus proche de DSS. Dans le cas présent, en choisissant CM = 61 dents, on obtient une rotation de la couronne mobile de:

$$61 / (61 - 60{,}894) = 579{,}499$$

Cela signifie que pour une giration du châssis 2, 3, la couronne mobile 8 se décale de 1/579,499 tour, et dans le même sens que le planétaire d'entrée 12 rotation "prograde".

Si l'on avait choisi 60 pour CM, on aurait obtenu une rotation "rétrograde" (sens inverse du planétaire) de valeur:

$$-67{,}114 \times 7{,}846 = -526{,}757$$

D'une façon générale, en posant DIFF = (CF/SE) x SS (différentiel), on aura:

$$CM > DIFF \Rightarrow \text{rotation prograde}$$

$$CM < DIFF \Rightarrow \text{rotation prograde}$$

De la même manière, avec PP = 146, CF = 1000, SE = 427, SS = 272 et CM = 637, on obtient une réduction de -2 155 796 approchant à 99,8% la réduction de 2 160 000 correspondant à une rotation de 1 tour par jour à partir d'une motorisation à 1500 tour/minute, typique des instruments de poursuite astrale.

Les modules des différentes dentures sont choisis sur deux critères essentiels:

- L'utilisation de l'appareil et la puissance à transmettre.
- La combinaison des modules permet de réduire au mieux la non-coaxialité des satellites d'entrée 5 et de sortie 7, tout en respectant à 98% près la réduction totale demandée.

Du fait de la multitude d'occurences et d'arrangements possibles, seule l'élaboration de programmes des calculs informatisés a permis de lister tous les montages possibles répondant à la fois à une réduction demandée, un sens de rotation imposé et à une puissance à transmettre.

Le principe revendiqué permet d'adapter l'appareil à une demande précise, simplifiant par là-même la cinématique d'un ensemble mécanique.

Il se caractérise, en résumé, par huit particularités:

1. Le satellite d'entrée 5 et le satellite de sortie 7 ne sont pas coaxiaux.
2. Le satellite d'entrée et le satellite de sortie sont synchrones en rotation et en giration.
3. Le satellite de sortie 7 est angulairement réglable par rapport au satellite d'entrée 5.
4. Le nombre de dents CM de la couronne mobile 8 est un entier du produit du rapport du nombre de dents CF de la couronne fixe 6 sur celui du satellite d'entrée 5 par celui du satellite de sortie 7.
5. Le sens de rotation de sortie est fonction de l'entier choisi, inférieur ou supérieur au résultat calculé.
6. Le choix des modules est fonction des puissances à transmettre et du décalage radial des satellites d'entrée et de sortie à minimiser.
7. Le réglage angulaire du satellite de sortie 7 est assuré grâce à l'accouplement entre le satellite d'entrée 5 et le joint homocinétique 9 et assure le contact réel et simultané de tous les satellites sur leur couronne ou roue respective.
8. Le réglage radial indépendant des satellite d'entrée et de sortie permet le réglage des engrènements jusqu'à la précontrainte.

D'ordre général il est à noter:

- que les divers réglages cités sont facilement réalisables en maintenance, augmentant ainsi la longévité des appareils,
- qu'un planétaire flottant, un système de frein, un limiteur de couple peuvent être intégrés sans difficultés à l'appareil,
- qu'il sera possible de fournir à l'utilisateur les éléments de base pouvant permettre la modification des caractéristiques d'un appareil telles que la réduction, le sens de rotation, la puissance nominale, la variation de réduction par pilotage, etc.

La notion d'irréversibilité dans le dispositif revendiqué est liée à l'énergie cinétique des pièces en mouvement sous l'effet multiplicateur de la cinématique inversée, à la valeur de réduction, au sens de rotation de sortie et à la valeur du rendement global de l'appareil.

Il est à noter que si les paliers des axes de satellites sont des bagues excentrées, leur rotation permet le réglage du satellite d'entrée 5, tandis que la rotation de l'accouplement 4 permet le réglage du satellite de sortie, ce qui rend possible le réglage du jeu au montage, et son éventuel rattrapage lors d'une maintenance ultérieure, dans sa partie la plus sensible au jeu: les engrènements des satellites sur les couronnes.

VARIANTES ET APPLICATIONS

- Les dentures peuvent prendre toutes formes connues à ce jour: droite, hélicoïdale, déportée, conique, etc.
- Les dentures peuvent être remplacées par des pignons spéciaux, des galets ou autres éléments à friction.
- Les satellites 5 et 7 peuvent rouler à l'intérieur de couronnes ou à l'extérieur de roues dentées.
- La liaison entre les satellites d'entrée et la couronne fixe 6 (ou roue dentée) d'une part, et la liaison entre les satellites de sortie et la couronne ou roue dentée mobile 8 d'autre part, peuvent être réalisées au moyen de roues dentées solidaires du châssis 2, 3, de brins souples sans tendeur de type chaîne ou courroie, crantée ou non.
- La couronne fixe 6 peut être rendue conditionnellement mobile. On obtient ainsi la possibilité de faire varier la valeur de la réduction ou de la multiplication, ayant pour effet de faire varier la vitesse de rotation de l'arbre de sortie 10. Il existe à partir de là au moins trois possibilités de variation de vitesse:

   1. Vitesse de l'arbre d'entrée 1 continue, avec vitesse de pilotage variable.
   2. Vitesse de l'arbre d'entrée variable, avec vitesse de pilotage continue.
   3. Dérivation partielle de la rotation d'entrée vers le pilotage de la couronne 6.

Ces diverses possibilités permettent la variation de la vitesse de rotation de sortie de manière à obtenir: soit une rotation plus rapide, soit une rotation plus lente, soit une rotation nulle, soit encore une inversion de sens, sans pour autant être obligé de modifier la vitesse de rotation d'entrée, ni son sens.

Deux dispositifs à variation de vitesse peuvent être montés en parallèle, l'arbre d'entrée de chacun d'eux étant entraîné en rotation par un organe moteur commun, l'arbre de sortie de chaque dispositif délivrant sa rotation sur l'une des roues d'un essieu et l'ensemble constituant un dispositif regroupant les caractéristiques et avantages d'une boîte de vitesse automatique pour véhicule, d'un convertisseur de couple et d'un différentiel actif et autobloquant.

- La prise de force peut, par l'utilisation d'un arbre de sortie 10 creux, être située du même côté que la motorisation.
- L'axe général du dispositif peut être creux et servir par exemple à l'entraînement d'un rotor d'hélicoptère, la sortie de turbine attaquant une couronne dentée d'entrée par un pignon conique, et les timoneries de commandes, câbles ou tringleries passant par le canal central.
- L'arbre d'entrée 1 ou l'arbre de sortie 10 peuvent être rendus fixes, le corps 11 de l'appareil étant alors mobile et utilisé comme organe d'entrée ou de sortie.
- On peut aussi envisager des variantes à satellites coniques dont les axes sont perpendiculaires à l'axe des couronnes et engrènent entre eux par des roues droites constituant l'organe de transmission homocinétique. Ce montage offre de très nombreuses possibilités de réduction ou multiplication dans le cadre du principe revendiqué.
- Comme précisé plus haut, le dispositif selon l'invention se prête particulièrement bien à la réalisation de systèmes de rotation journalière pour instruments de poursuite astrale (antennes radioélectriques et télescopes), qui nécessitent une réduction de 2160000 à partir d'un classique moteur à 1500 tours par minute, cette réduction pouvant être atteinte avec un minimum de roues dentées, sans recourir au gigantisme des roues dentées ni à la prolifération de réducteurs en cascade, ce qui procure un jeu de fonctionnement extrêmement réduit et une probable irréversibilité fort utile en un tel cas.

Par ailleurs, le principe même de l'invention autorise son intégration dans un tel ouvrage, non plus à titre de simple réducteur mais bel et bien en tant qu'élément structurel de la rotation, la couronne d'orientation de l'antenne et la couronne mobile 8 du réducteur étant alors la même pièce, et chaque paire de satellites d'entrée 5 et de sortie 7 de ce gros réducteur pouvant être constitués par un réducteur selon le dispositif revendiqué, le satellite de sortie 7 étant solidaire de l'arbre de sortie, et le satellite d'entrée constitué d'une couronne dentée solidaire du corps de l'appareil. Le moteur est alors fixé à un bras porte-satellites axé sur le centre de la rotation de l'antenne. La nécessité d'un conduit central de descente d'image ne pose aucun problème.

- Indiquons pour terminer que pour des besoins particuliers tels que l'enroulement de câbles, l'arbre de sortie 10 peut avantageusement être rendu fixe, le corps (carter) de l'appareil constituant alors l'organe délivrant la rotation de sortie. De la même façon, l'arbre d'entrée 1 peut dans certains cas être rendu fixe, le corps de l'appareil recevant la rotation d'entrée.

Selon les applications, les différents éléments constitutifs du dispositif peuvent être réalisés en toute matière, métal, matière plastique, etc. Des matériaux particuliers comme la céramique ou certains polymères pourront être utilisés dans le cas où le dispositif est appelé à travailler dans des milieux difficiles tels que: température élevée, milieu abrasif, agressif, spacial, nucléaire, pressurisé, cryogénique, sismique.

Le positionnement des divers éléments constitutifs donne à l'objet de l'invention un maximum d'effets utiles qui n'avaient pas été, à ce jour, obtenus par des dispositifs similaires.

## Revendications

1. Dispositif mécanique de réduction, de multiplication et de variation de vitesse de rotation, comprenant une couronne fixe (6) et une couronne de sortie mobile (8), lesdites couronnes étant disposées coaxialement et engrènant, respectivement, avec au moins un couple de pignons satellites (5) (7), lesdits satellites (5) (7) n'étant pas coaxiaux et portés par un porte-satellite commun (2), caractérisé en ce que :

   - les modules ou les nombres de dents des deux satellites (5) (7) ne sont pas nécessairement les mêmes,
   - les satellites sont synchronisés en rotation par un organe de transmission homocinétique (9),
   - les satellites sont entrainés par un arbre d'entrée (1) relié soit à un planétaire (12) soit au porte-satellites (2).

2. Dispositif selon la revendication 1, caractérisé en ce que les satellites d'entrée (5) et de sortie (7) sont couplés en rotation par un accouplement (4) autorisant leur réglage angulaire et/ou radial au montage et en maintenance et permettant le réglage jusqu'à la précontrainte du jeu d'engrènement desdits satellites et de leurs couronnes respectives.

3. Dispositif selon la revendication 1, caractérisé en ce que le ou les couples de satellites (5-7) ne sont pas en contact avec les couronnes fixes et mobiles (6,8), la transmission entre couronne fixe (6) et satellite d'entrée (5), d'une part, entre couronne mobile (8) et satellite de sortie (7), d'autre part, étant assurée par des roues dentées intermédiaires ou des brins souples tels que chaînes ou courroies crantées ou non.

4. Dispositif selon l'une quelconque des revendications 1 à 3, caractérisé en ce que l'axe général est creux pour laisser libre passage à des tringleries, timoneries de commandes, câbles ou éléments similaires passant par le canal central.

5. Dispositif selon l'une quelconque des revendications 1 à 4, caractérisé en ce que l'arbre d'entrée (1) est du même côté que l'arbre de sortie (10), l'un des deux étant creux.

6. Dispositif selon l'une quelconque des revendications 1 à 5, caractérisé en ce que l'un des arbres d'entrée (1) ou de sortie (10) est rendu fixe, le corps (11) ou carter de l'appareil constituant respectivement l'organe recevant la rotation d'entrée, ou l'organe délivrant la rotation de sortie.

7. Dispositif selon l'une quelconque des revendications 1 à 6, caractérisé en ce que le contrôle de la vitesse de rotation de l'arbre de sortie (10), y compris l'inversion du sens de rotation, est réalisé par le pilotage de la couronne fixe (6) rendue dans ce cas conditionnellement mobile, sans que cette variation ou cette inversion nécessite une variation ou une inversion du sens de rotation de l'arbre d'entrée.

8. Dispositif selon l'une quelconque des revendications 1 à 7, caractérisé en ce que, dans des installations importantes telles que systèmes de rotation d'antennes radioélectriques ou télescopes, il constitue un élément structurel de l'appareil auquel il collabore, la couronne d'orientation desdites installations constituant la couronne mobile (8) du réducteur, et chaque paire de satellites d'entrée (5) et de sortie (7) pouvant être constitués eux-mêmes par un réducteur selon le dispositif revendiqué, le satellite de sortie (7) étant solidaire de l'arbre de sortie, et le satellite d'entrée (5) constitué d'une couronne dentée solidaire du corps de l'appareil, le moteur d'entrainement étant fixé à un bras porte-satellites axé sur le centre de la rotation de l'instrument.

9. Dispositif selon la revendication 1, caractérisé en ce que pour obtenir la plus grande valeur possible de réduction ou de multiplication de vitesse, le nombre de dents CM de la couronne mobile (8) est choisi égal à l'entier le plus proche du rapport (CF x SS) / SE, dans lequel CF est le nombre de dents de la couronne fixe (6), SS celui du satellite de sortie (7) et SE celui du satellite d'entrée (5), la rotation de sortie étant prograde si cet entier est supérieur audit rapport et rétrograde si il lui est inférieur.

10. Dispositif selon l'une quelconque des revendications 1 à 9, caractérisé en ce que les dentures sont remplacées par des galets ou autres éléments à friction.

11. Dispositif selon l'une quelconque des revendications 1 à 10, caractérisé en ce que certains de ces éléments constitutifs sont réalisés en céramique ou matériau similaire le rendant apte à travailler dans des milieux difficiles tels que les milieux chauds, abrasifs, agressifs, spaciaux, nucléaires, pressurisés, cryogéniques, sismiques.

**Patentansprüche**

1. Mechanische Vorrichtung zur Reduzierung, Erhöhung und Änderung der Drehgeschwindigkeit, die einen festen Kranz (6) und einen beweglichen Ausgangskranz (8) enthält, wobei diese Kränze koaxial angelegt sind und mit mindestens einem Paar Planetenrädern (5) (7) eingreifen, wobei die besagten Planetenräder (5) (7) nicht koaxial sind und von einem gemeinsamen Träger (2) gehalten werden, dadurch gekennzeichnet, daß:

   - die Zähnezahlen je Zoll Teilkreisdurchmesser oder Anzahlen der Zähne der beiden Planetenräder (5) (7) nicht unbedingt gleich sind,
   - die Planetenräder in der Drehung durch ein homokinetisches Übertragungsorgan (9) synchronisiert werden,
   - die Planetenräder durch eine Eingangswelle (1) angetrieben werden, die entweder mit einem Zentralrad (12) oder dem Planetenradträger (2) verbunden ist.

2. Vorrichtung nach Anspruch 1, dadurch gekennzeichnet, daß die Planetenräder des Eingangs (5) und des Ausgangs (7) durch eine Kupplung (4) drehbar verkuppelt sind, die bei der Montage oder Wartung ihre Winkel- und/oder radiale Einstellung ermöglicht, sowie die Einstellung des Eingriffsspiels der besagten Planetenräder und ihrer jeweiligen Kränze bis zur mechanischen Vorspannung.

3. Vorrichtung nach Anspruch 1, dadurch gekennzeichnet, daß die Planetenradpaare (5-7) keinen Kontakt mit den festen und beweglichen Kränzen (6,8) haben; die Übertragung zwischen festem Kranz (6) und Eingangsplanetenrad (5) einerseits und dem beweglichen Kranz (8) und Ausgangsplanetenrad (7) andererseits wird durch Zwischenzahnräder gewährleistet oder durch flexible Trume wie Ketten oder Riemen, mit oder ohne Verzahnung.

4. Vorrichtung nach einem beliebigen Anspruch 1 bis 3, dadurch gekennzeichnet, daß die Hauptwelle hohl ist, um freien Durchgang für Gestänge, Steuergestänge, Kabel oder ähnliche Elemente zu gewährleisten, die den zentralen Kanal durchlaufen.

5. Vorrichtung nach einem beliebigen Anspruch 1 bis 4, dadurch gekennzeichnet, daß die Eingangswelle (1) sich an der gleichen Seite befindet wie die Ausgangswelle (10), wobei eine dieser Wellen hohl ist.

6. Vorrichtung nach einem beliebigen Anspruch 1 bis 5, dadurch gekennzeichnet, daß eine der Eingangswelle (1) oder Ausgangswelle (10) befestigt wird, wobei der Körper (11) oder das Gehäuse des Geräts jeweils das Organ bilden, das die Eingangsdrehung erhält oder das Organ, das die Ausgangsdrehung liefert.

7. Vorrichtung nach einem beliebigen Anspruch 1 bis 6, dadurch gekennzeichnet, daß die Steuerung der Drehgeschwindigkeit der Ausgangswelle (10) einschließlich Umkehrung der Drehrichtung, durch Steuerung des festen Kranzes (6) durchgeführt wird, der in diesem Fall bedingt beweglich gemacht wird, ohne daß diese Änderung oder Umkehrung eine Änderung oder Umkehrung der Drehrichtung der Eingangswelle erforderlich macht.

8. Vorrichtung nach einem beliebigen Anspruch 1 bis 7, dadurch gekennzeichnet, daß sie in Großinstallationen wie z.B. Systemen zur Drehung von radioelektrischen Antennen oder Teleskopen einen strukturellen Bestandteil des Gerätes bildet mit dem sie zusammenarbeitet, wobei der Orientationskranz der besagten Installation den beweglichen Kranz (8) des Reduzierers bildet und jedes Paar Eingangsplanetenräder (5) oder Ausgangsplanetenräder (7) durch einen Reduzierer gemäß der zum Patent angemeldeten Vorrichtung gebildet werden können, wobei das Ausgangsplanetenrad (7) mit der Ausgangswelle verbunden ist und das Eingangsplanetenrad (5) einen Zahnkranz bildet, der mit dem Gerätekörper verbunden ist, und der Antriebsmotor an einem Planetenradträgerarm befestigt ist, der auf die Drehungsmitte des Instrumentes ausgerichtet ist.

9. Vorrichtung nach Anspruch 1, dadurch gekennzeichnet, daß, um den größtmöglichen Wert zur Reduzierung oder Erhöhung der Geschwindigkeit zu erhalten, die Anzahl der Zähne CM des beweglichen Kranzes (8) gleich dem Ganzen gewählt wird, das am nächsten zum Verhältnis (CF x SS) / SE liegt, wobei CF die Anzahl der Zähne des festen Kranzes (6) ist, SS der Anzahl der Zähne des Ausgangsplanetenrades (7) und SE der Anzahl der Zähne des Eingangsplanetenrades (5) entspricht ; die Ausgangsdrehung ist vergrößernd wenn dieses Ganze größer als das besagte Verhältnis ist und verkleinernd, wenn es kleiner ist.

**10.** Vorrichtung nach einem beliebigen Anspruch 1 bis 9, dadurch gekennzeichnet, daß die Verzahnungen durch Walzen oder andere Friktionselemente ersetzt werden.

**11.** Vorrichtung nach einem beliebigen Anspruch 1 bis 10, dadurch gekennzeichnet, daß einige dieser Bestandselemente aus Keramik oder ähnlichem Material hergestellt werden, wodurch sie unter schweren Bedingungen arbeiten können, wie zum Beispiel in heißen, scheuernden, aggressiven, Raumfahrt-, nuklearen, Druck-, Tiefsttemperatur- und seismischen Umgebungen.

**Claims**

**1.** Mechanical device for reduction, multiplication and variation of rotation speeds comprising a fixed annular gear (6) and a moveable output annular gear (8), said annular gears being arranged coaxially and meshing respectively with at least one pair of planet gears (5) (7), said planet gears (5) (7) being non coaxial and mounted on a common planet carrier (2) characterised in that:

- the moduli or number of teeth of the two planet gears (5) (7) are not necessarily the same,
- the planet gears are synchronised in rotation by a homokinetic transmission gear (9),
- the planet gears are driven by input shaft (1) linked either to one planet gear (12) or the planet carrier (2).

**2.** Device as claimed in claim 1, characterised in that the input planet gear (5) and output planet gear (7) are linked in rotation by a coupling (4) that allows their angular and/or radial adjustment at the time of assembly and maintenance, allowing adjustment down to the prestress of the backlash of said planet gears and their respective annular gears.

**3.** Device as claimed in claim 1, characterised in that the pair or pairs of planet gears (5-7) are not in contact with the fixed and moveable annular gears (6, 8), the transmission between the fixed annular gear (6) and input planet gear (5), on the one hand, and between the moveable annular gear (8) and output planet gear (7), on the other hand, being ensured by intermediate toothed wheels or flexible elements such as toothed or non-toothed chains or belts.

**4.** Device as claimed in any of claims 1 to 3, characterised in that the general shaft is hollow to allow unobstructed space for rod assemblies, control gear, cables or similar elements that pass through the central channel.

**5.** Device as claimed in any of claims 1 to 4, characterised in that the input shaft (1) is on the same side as the output shaft (10) with one of them being hollow.

**6.** Device as claimed in any of claims 1 to 5, characterised in that either the input shaft (1) or output shaft (10) is fixed, the body (11) or housing of the apparatus constituting respectively the device that receives the input rotation or the device that delivers the output rotation.

**7.** Device as claimed in any of claims 1 to 6, characterised in that control of the rotation speed of the output shaft (10), including reversal of the direction of rotation, is obtained by controlling the fixed annular gear (6), which is rendered conditionally mobile in this case, without such variation or reversal requiring any variation or reversal of the direction of rotation of the input shaft.

**8.** Device as claimed in any of claims 1 to 7, characterised in that in large installations such as systems for rotating radio-frequency antennas or telescopes, it constitutes a structural member of the apparatus with which it cooperates, the orienting annular gear of said installations constituting the moveable annular gear (8) of the reduction gear and each pair of input planet gears (5) and output planet gears (7) being capable of themselves consisting of a reducing gear according to the device claimed, the output planet gear (7) being joined to the output shaft and the input planet gear (5) consisting of a toothed annular gear integral with the body of the apparatus and the drive motor being attached to a planet carrier arm that is aligned with the centre of rotation of the instrument.

**9.** Device as claimed in claim 1, characterised in that, in order to obtain the greatest possible speed reduction or multiplication value, the number of teeth CM of the moveable annular gear (8) is selected so that it equals the nearest integer to the ratio (CF x SS)/SE where CF is the number of teeth of fixed annular gear (6), SS is the number of teeth of output planet gear (7) and SE is the number of teeth of input planet gear (5), the output rotation being prograde if this integer exceeds said ratio and retrograde if it is less than this integer.

**10.** Device as claimed in any of claims 1 to 9, characterised in that the tooth patterns are replaced by rollers or other friction-type elements.

**11.** Device as claimed in any of claims 1 to 10, characterised in that some of the component parts are made of a ceramic or similar material making it capable of operating in harsh environments such as hot, abrasive, corrosive, space, nuclear, pressurised, cryogenic or seismic environments.

Fig. 1

Fig. 2